# EUROPEAN PATENT SPECIFICATION

(11) **EP 2 966 745 B1**
(45) Date of publication and mention of the grant of the patent: **19.02.2020**
(21) Application number: 15166503.1
(22) Date of filing: 06.05.2015
(51) Int. Cl.: H02H 9/04, H02M 7/06, H02J 7/02

(54) **TRANSIENT VOLTAGE PROTECTION FOR BRIDGE RECTIFIER**
ÜBERSPANNUNGSSCHUTZ FÜR BRÜCKENGLEICHRICHTER
PROTECTION CONTRE LES SURTENSIONS TRANSITOIRES POUR REDRESSEUR À PONT

(30) Priority: 09.07.2014 US 201414326888
(43) Date of publication of application: 13.01.2016
(73) Proprietor: Delphi Technologies IP Limited, St. Michael (BB)
(72) Inventor: OLIVARES PERL, Alejandro, Kokomo, IN Indiana 46902 (US); SRIRAM, Tillasthanam V., Carmel, IN Indiana 46032 (US)
(74) Representative: Delphi France SAS

(56) References cited:
- JP-A- H0 923 638
- US-A1- 2006 139 832
- US-A1- 2013 014 385

## Description

### TECHNICAL FIELD OF INVENTION

This disclosure generally relates to a battery charging device comprising a full-wave rectifier, and more particularly relates to a metal-oxide varistor (MOV) connected in parallel with a diode of a bridge that is part of the full-wave rectifier.

### BACKGROUND OF INVENTION

Electrical devices that are sold to the public typically must pass various testing standards. In general, such testing standards are intended to assure some degree of safety for persons using the electrical devices, and/or assure some degree of reliability by testing to see if the devices are susceptible to damage by certain electrical situations such as a lightning strike or other voltage transients. It is advantageous if the manufacturing process is such that an electrical device can be tested after being fully assembled. However, some circuit configurations place transient protection devices at a schematic location that precludes performing high-voltage isolation (Hi-Pot) testing. In such an instance, the Hi-Pot testing is performed before the transient protection devices are installed, and then the transient testing may be performed if desired.

### SUMMARY OF THE INVENTION

In accordance with one embodiment, a battery charging device for charging a battery with power drawn via a wall plug is provided. The device is configured to pass a lightning test applied the wall plug. The device includes four diodes, two first metal-oxide varistors (MOVs), and a capacitor. The four diodes include a first diode with the anode electrically coupled to a first terminal of a wall plug, a second diode with the anode electrically coupled to a second terminal of the wall plug, a third diode with the cathode electrically coupled to the first terminal of the wall plug, and a fourth diode with the cathode electrically coupled to the second terminal of the wall plug. The first diode, the second diode, the third diode, and the fourth diode cooperate to form a full-wave rectifier. The two MOVs include a first metal-oxide varistor (first MOV) connected in parallel with the third diode, and a second metal-oxide varistor (second MOV) connected in parallel with the fourth diode. The capacitor is a first capacitor arranged to electrically couple the anodes of the third diode and the fourth diode to a chassis ground of the device.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a schematic of rectifier suitable for a charging device in accordance with one embodiment; and
Fig. 2 is a schematic of a known rectifier in accordance with one embodiment.

### DETAILED DESCRIPTION

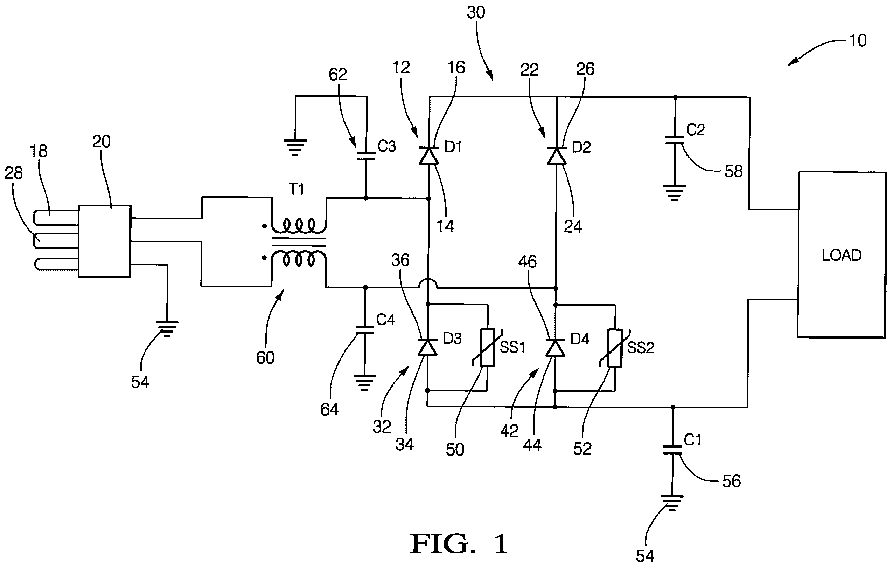

Fig. 1 illustrates a non-limiting example of a battery charging device, hereafter referred to as the device 10. While the features described herein are directed to a battery charging device for charging a battery with power drawn via a wall plug, it will be recognized that the teachings presented herein are applicable to a variety of electronic devices that receive power via a wall plug, in particular devices that include a rectifier circuit that converts the alternating current (AC) type power from the wall plug to direct current (DC) type power commonly used by solid state electronics.

The International Electrotechnical Commission (IEC) has developed a variety of tests for evaluating the robustness of an electrical device. The improvements to a typical rectifier circuit described herein are generally directed toward passing the tests in IEC 61000-4-5: Lightning and industrial surges. However, it is recognized that the improvements described herein are not limited to the lightning tests. That is, other benefits may be realized by applying the improvements described herein to a rectifier circuit. A summary of IEC 61000-4-5 is found in Application note AN4275 published by STMicroelectronics.

The device 10, or more specifically the rectifier circuit within the device 10 includes: a first diode 12 (D1) with the anode 14 of the first diode 12 electrically coupled to a first terminal 18 of a wall plug 20; a second diode 22 (D2) with the anode 24 of the second diode 22 electrically coupled to a second terminal 28 of the wall plug 20; a third diode 32 (D3) with the cathode 36 of the third diode 32 electrically coupled to the first terminal 18 of the wall plug 20; and a fourth diode 42 (D4) with the cathode 46 of fourth diode 42 electrically coupled to the second terminal 28 of the wall plug 20. As will be recognized by those in the art, the first diode 12, the second diode 22, the third diode 32, and the fourth diode 42 cooperate to form a full-wave rectifier 30, also known as a diode bridge.

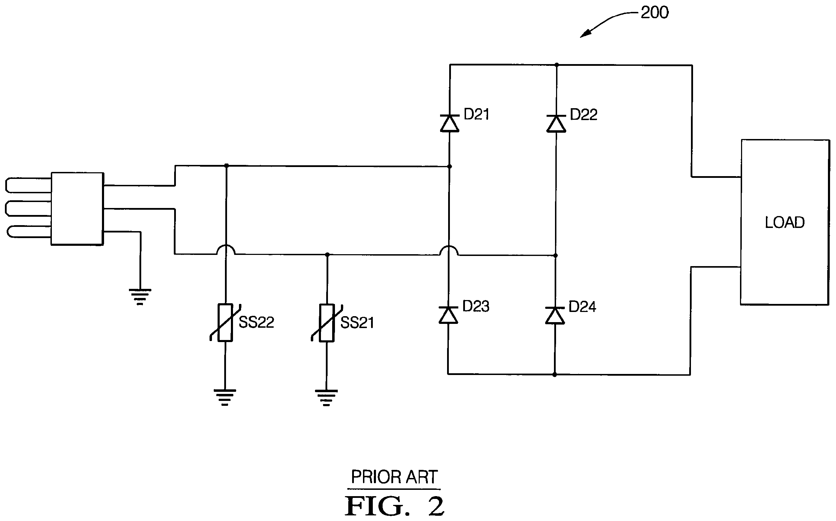

Fig. 2 illustrates an example of a known (i.e. prior art, as disclosed for example in document JP05-199737) rectifier circuit 200 that includes a full-wave rectifier formed by four diodes (D21, D22, D23, D24), and surge suppression components SS21 and SS22. SS21 and SS22 are located in the schematic where they are susceptible to damage during high voltage isolation (Hi-Pot) testing. In general, the surge suppression components SS21 and SS22 are provided to protect the lower diodes (D23, D24), and possibly other components in the LOAD from transient voltages such as those present during Lightning and industrial surges testing.

Hi-Pot testing applies a relatively large voltage to the input terminals of a wall plug relative to a chassis connection (i.e. chassis ground) of the device under test, and checks to see if any electricity is being conducted while the high voltage is being applied. As those in the art will recognize, at some voltage level applied to input terminal of the wall plug relative to the chassis ground connection, the metal-oxide varistors (MOVs) used for SS21 and SS22 will conduct and the equipment will fail the Hi-Pot test or the device 10 may be damaged. As such, for some Hi-Pot testing, the MOVs are not installed during the test. This situation is undesirable as manufacturing efficiency is reduced because the known rectifier circuit 200 must be partially assembled, then Hi-Pot tested, and then further assembled by installing SS21 and SS22.

The device 10 described herein avoids this problem and thereby improves manufacturing efficiency by installing the a first metal-oxide varistor (SS1), hereafter the first MOV 50, connected in parallel with the third diode 32; and a second metal-oxide varistor (SS2), hereafter the second MOV 52, connected in parallel with the fourth diode 42. Since the surge suppression devices SS1 and SS2 do not have a direct connection to chassis ground 54, they are not subject to potentially damaging long-term exposure to high voltage during a Hi-Pot test. A suitable MOV for SS1 and SS2 is part number 230E2S5M3,5K1 available from Epcos AG.

The device 10 also advantageously includes a first capacitor 56 (C1) arranged to electrically couple the anode 34 of the third diode 32 and the anode 44 of the fourth diode 42 to the chassis ground 54 of the device 10. The first MOV 50 (SS1) and the second MOV 52 (SS2) cooperate with the first capacitor 56 (C1) to protect the lower diodes (D3, D4) of the full-wave rectifier 30, and to provide other electromagnetic interference (EMI) benefits that will be recognized by those in the art. A suitable value for the first capacitor 56 (C1) is 22nF, but other values may be selected depending on the electrical characteristics of the LOAD. By way of example and not limitation, the LOAD may include active control circuitry such as a voltage regulator, and may include other circuitry such as a microprocessor configured to control the voltage regulator when the device is being used to charge a battery which may also be part of the LOAD.

As can be understood from the schematic, the electrical characteristics of the first MOV 50 (SS1) and the second MOV 52 (SS2) are selected to protect D3 and D4 from excessive reverse-bias voltage when a positive voltage (relative to the chassis ground 54) is applied to the first terminal 18 and/or the second terminal 28. Testing performed without any surge suppression devices indicated that the bottom diodes (D3, D4) were the most susceptible to damage. Adding SS1 and SS2 as shown in Fig. 1 protected the bottom diodes during repeated testing.

While not subscribing to any particular theory, it is believed that a large enough negative voltage transient applied to the first terminal 18 and/or the second terminal 28 could lead to excessive reverse-bias voltage across D1 and/or D2, and that additional surge suppression devices similar to SS1 and SS2 could be added in parallel with D1 and D2.

While SS1 and SS2 are shown as being connected directly in parallel with D3 and D4 respectively, that is without any other component in series with SS1 or SS2, it is contemplated that a test condition or performance requirement may arise where there may be some advantage to another component in series with SS1 or SS2 such as a ferrite bead. SS1 and SS2 are shown as being connected directly in parallel with D3 and D4 respectively, as such a configuration was the minimum cost solution to the problem of preventing damage to D3 and D4 during testing, and allowing for isolation (Hi-Pot) testing with the surge suppression devices SS1 and SS2 installed.

The device 10 may also include a second capacitor 58 arranged to electrically couple the cathode 16 of the first diode 12 and the cathode 26 of the second diode 22 to the chassis ground of the device. While not subscribing to any particular theory, it is believed that the second capacitor 58 may help to absorb positive transients applied to the first terminal 18 and/or the second terminal 28 as the first diode 12 and the second diode 22 would be forward biased, at least temporarily, by a positive voltage relative to the chassis ground 54.

The device 10 may also include a common-mode choke 60 (T1) which is similar to a transformer. The common-mode choke 60 (T1) is electrically interposed between the wall plug 20 and the full-wave rectifier 30. T1 may cooperate with the surge suppressors SS1 and SS2, and capacitors C1 and C2 to further protect the diodes of the full-wave rectifier 30.

The device 10 may also include a third capacitor 63 (C3) connected between the anode 14 of the first diode 12 and the chassis ground 54 of the device 10, and a fourth capacitor 64 (C4) connected between the anode 24 of the second diode 22 and the chassis ground 54 of the device 10. C3 and C4 may also cooperate with the surge suppressors SS1 and SS2, and capacitors C1 and C2 to further protect the diodes of the full-wave rectifier 30. A suitable value for C3 and C4 is 6.8nF, but other values may be selected depending on the electrical characteristics of the LOAD.

Accordingly, a battery charging device (the device 10) for charging a battery with power drawn via a wall plug is provided that is configured to pass a lightning test applied the wall plug. The placement of the surge suppressors SS1 and SS2 has been shown by testing to protect the lower diodes (D3, D4) of the full-wave rectifier 30. It is contemplated that the surge suppressors SS1 and SS2 would also be effective at protecting other devices such as MOSFETs and IGBTs when those other devices are used instead of diodes, or in combination with diodes, to form a full-wave rectifier. The surge suppressor s SS1 and SS2 can be in place during Hi-Pot (i.e. high voltage isolation) testing, which is not the case if the surge suppressors are placed as shown in Fig. 2. As such, manufacturing efficiency is improved as the device 10 can be fully assembled prior to testing, as opposed to being partially assembled, then partially tested, then further assembled and further tested.

While this invention has been described in terms of the preferred embodiments thereof, it is not intended to be so limited, but rather only to the extent set forth in the claims that follow.

## Claims

1. A battery charging device (10) for charging a battery with power drawn via a wall plug (20), said device (10) comprising:
a first diode (12) with the anode (14) electrically coupled to a first terminal (18) of a wall plug (20);
a second diode (22) with the anode (14) electrically coupled to a second terminal (28) of the wall plug (20);
a third diode (32) with the cathode (16) electrically coupled to the first terminal (18) of the wall plug (20);
a fourth diode (42) with the cathode (16) electrically coupled to the second terminal (28) of the wall plug (20), wherein the first diode (12), the second diode (22) the third diode (32), and the fourth diode (42) cooperate to form a full-wave rectifier (30);
**characterised in that** the battery charging device further comprises:
a first metal-oxide varistor (first MOV (50)) connected in parallel with the third diode (32);
a second metal-oxide varistor (second MOV (52)) connected in parallel with the fourth diode (42); and
a first capacitor (56) arranged to electrically couple the anodes of the third diode (32) and the fourth diode (42) to a chassis ground (54) of the device (10).

2. The device (10) in accordance with claim 1, wherein the device (10) includes a second capacitor (58) arranged to electrically couple the cathodes of the first diode (12) and the second diode (22) to the chassis ground (54) of the device (10).

3. The device (10) in accordance with claim 1, wherein the device (10) includes a common-mode choke (60) electrically interposed between the wall plug (20) and the full-wave rectifier (30).

4. The device (10) in accordance with claim 1, wherein the device (10) includes a third capacitor (63) connected between the anode (14) of the first diode (12) and the chassis ground (54) of the device (10), and a fourth capacitor (64) connected between the anode (14) of the second diode (22) and the chassis ground (54) of the device (10).

## Patentansprüche

1. Batterieladevorrichtung (10) zum Laden einer Batterie mit einer über einen Wandanschlussstecker (20) bezogenen Leistung, wobei die Vorrichtung (10) aufweist:
eine erste Diode (12) mit der Anode (14) elektrisch mit einem ersten Anschluss (18) eines Wandanschlusssteckers (20) gekoppelt;
eine zweite Diode (22) mit der Anode (14) elektrisch mit einem zweiten Anschluss (28) des Wandanschlusssteckers (20) gekoppelt;
eine dritte Diode (32) mit der Kathode (16) elektrisch mit dem ersten Anschluss (18) des Wandanschlusssteckers (20) gekoppelt;
eine vierte Diode (42) mit der Kathode (16) elektrisch mit dem zweiten Anschluss (28) des Wandanschlusssteckers (20) gekoppelt, wobei die erste Diode (12), die zweite Diode (22), die dritte Diode (32) und die vierte Diode (42) zusammenwirken, um einen Vollwellengleichrichter (30) zu bilden;
**dadurch gekennzeichnet, dass** die Batterieladevorrichtung weiter aufweist:
einen ersten Metalloxidvaristor (erster MOV (50)), der parallel zu der dritten Diode (32) verbunden ist;
einen zweiten Metalloxidvaristor (zweiter MOV (52)), der parallel zu der vierten Diode (42) verbunden ist; und
einen ersten Kondensator (56), der zum elektrischen Koppeln der Anoden der dritten Diode (32) und der vierten Diode (42) mit einer Gehäusemasse (54) der Vorrichtung (10) angeordnet ist.

2. Die Vorrichtung (10) gemäß Anspruch 1, wobei die Vorrichtung (10) einen zweiten Kondensator (58) umfasst, der zum elektrischen Koppeln der Kathoden der ersten Diode (12) und der zweiten Diode (22) mit der Gehäusemasse (54) der Vorrichtung (10) angeordnet ist.

3. Die Vorrichtung (10) gemäß Anspruch 1, wobei die Vorrichtung (10) eine Gleichtaktdrossel (60) umfasst, die elektrisch zwischen dem Wandanschlussstecker (20) und dem Vollwellengleichrichter (30) angeordnet ist.

4. Die Vorrichtung (10) gemäß Anspruch 1, wobei die Vorrichtung (10) einen dritten Kondensator (63), der zwischen der Anode (14) der ersten Diode (12) und der Gehäusemasse (54) der Vorrichtung (10) verbunden ist, und einen vierten Kondensator (64) umfasst, der zwischen der Anode (14) der zweiten Diode (22) und der Gehäusemasse (54) der Vorrichtung (10) verbunden ist.

## Revendications

1. Dispositif de charge de batterie (10) pour charger une batterie avec une énergie tirée depuis une prise murale (20), ledit dispositif (10) comprenant :
une première diode (12) dont l'anode (14) est électriquement couplée à une première borne (18) d'une prise murale (20) ;
une seconde diode (22) dont l'anode (14) est électriquement couplée à une seconde borne (28) de la prise murale (20) ;
une troisième diode (32) dont la cathode (16) est électriquement couplée à la première borne (18) de la prise murale (20) ;
une quatrième diode (42) dont la cathode (16) est électriquement couplée à la seconde borne (28) de la prise murale (20),
dans lequel la première diode (12), la seconde diode (22), la troisième diode (32), et la quatrième diode (42) coopèrent pour former un redresseur de pleine onde (30) ;
**caractérisé en ce que** le dispositif de charge de batterie comprend en outre :
un premier varistor métal-oxyde (premier MOV (50)) connecté en parallèle avec la troisième diode (32) ;
un second varistor métal-oxyde (second MOV (52)) connecté en parallèle avec la quatrième diode (42) ; et
un premier condensateur (56) agencé pour coupler électriquement les anodes de la troisième diode (32) et la quatrième diode (42) à une masse (54) du châssis du dispositif (10).

2. Dispositif (10) selon la revendication 1, dans lequel le dispositif (10) inclut un second condensateur (58) agencé pour coupler électriquement les cathodes de la première diode (12) et de la seconde diode (22) à la masse (54) du châssis du dispositif (10).

3. Dispositif (10) selon la revendication 1, dans lequel le dispositif (10) inclut une self de mode commun (60) interposée électriquement entre la prise murale (20) et le redresseur de pleine onde (30).

4. Dispositif (10) selon la revendication 1, dans lequel le dispositif (10) inclut un troisième condensateur (63) connecté entre l'anode (14) de la première diode (12) et la masse (54) du châssis du dispositif (10), et un quatrième condensateur (64) connecté entre l'anode (14) de la seconde diode (22) et la masse (54) du châssis du dispositif (10).
